(19) Europäisches Patentamt
European Patent Office
Office européen des brevets

(11) **EP 2 762 712 A2**

(12) **EUROPÄISCHE PATENTANMELDUNG**

(43) Veröffentlichungstag:
06.08.2014 Patentblatt 2014/32

(51) Int Cl.:
*F02D 41/14* (2006.01)      *F02D 19/08* (2006.01)
*F02D 41/00* (2006.01)

(21) Anmeldenummer: 14152233.4

(22) Anmeldetag: **23.01.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **30.01.2013 DE 102013201515**

(71) Anmelder: **DEERE & COMPANY**
**Moline, Illinois 61265-8098 (US)**

(72) Erfinder:
• **Dieringer, Stefanie**
**45650 Saint Jean Le Blanc (FR)**
• **Pickel Dr., Peter**
**68199 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(54) **Verfahren zur Ermittlung der Zusammensetzung eines Dieselkraftstoffgemischs**

(57) Verfahren zur Ermittlung der Zusammensetzung eines Dieselkraftstoffgemischs für einen Verbrennungsmotor in einem Kraftfahrzeug, bei dem auf Grundlage eines vorgegebenen Abgasmodells eine für die Verwendung rein fossilen Dieselkraftstoffs zu erwartende Abgastemperatur als Referenzwert ($T_{ref}$) bestimmt wird, wobei die Bestimmung des Referenzwerts ($T_{ref}$) nach Maßgabe einer momentanen Motorleistung ($P_{ist}$) erfolgt. Zugleich wird mittels eines in einem Abgasstrom liegenden Abgastemperatursensors ein für die Abgastemperatur vorliegender Istwert ($T_{ist}$) ermittelt. Anhand eines zwischen dem Istwert ($T_{ist}$) und dem Referenzwert ($T_{ref}$) durchgeführten Vergleichs wird eine Temperaturabweichung ($T_{diff}$) berechnet, aus der auf einen dem Dieselkraftstoff beigemischten erhöhten Biokraftstoffanteil geschlossen wird.

FIG. 1

EP 2 762 712 A2

**Beschreibung**

Die Erfindung betrifft ein Verfahren zur Ermittlung der Zusammensetzung eines Dieselkraftstoffgemischs für einen Verbrennungsmotor in einem Kraftfahrzeug.

Ein derartiges Verfahren geht beispielsweise aus der DE 10 2008 025 350 A1 hervor, bei dem eine Bestimmung der Zusammensetzung eines Dieselkraftstoffgemischs auf Grundlage einer Fourier-Analyse von in dem Dieselkraftstoffgemisch hervorgerufenen Druckschwingungen erfolgt. Angesichts der Notwendigkeit hochauflösender Drucksensoren zur Erfassung der Druckschwingungen lässt sich das bekannte Verfahren nur mit vergleichsweise hohem Aufwand verwirklichen.

Es ist daher Aufgabe der vorliegenden Erfindung, ein Verfahren der eingangs genannten Art dahingehend weiterzubilden, dass dieses eine vereinfachte Ermittlung der Zusammensetzung eines Dieselkraftstoffgemischs erlaubt.

Diese Aufgabe wird durch ein Verfahren mit den Merkmalen des Patentanspruchs 1 gelöst.

Bei dem erfindungsgemäßen Verfahren zur Ermittlung der Zusammensetzung eines Dieselkraftstoffgemischs für einen Verbrennungsmotor in einem Kraftfahrzeug wird auf Grundlage eines vorgegebenen Abgasmodells eine für die Verwendung rein fossilen Dieselkraftstoffs zu erwartende Abgastemperatur als Referenzwert $T_{ref}$ bestimmt, wobei die Bestimmung des Referenzwerts $T_{ref}$ nach Maßgabe einer momentanen Motorleistung $P_{ist}$ erfolgt. Zugleich wird mittels eines in einem Abgasstrom liegenden Abgastemperatursensors ein für die Abgastemperatur vorliegender Istwert $T_{ist}$ ermittelt. Anhand eines zwischen dem Istwert $T_{ist}$ und dem Referenzwert $T_{ref}$ durchgeführten Vergleichs wird eine Temperaturabweichung $T_{diff}$ berechnet, aus der wiederum auf einen dem Dieselkraftstoff beigemischten erhöhten Biokraftstoffanteil geschlossen wird.

Das erfindungsgemäße Verfahren macht sich den Umstand zunutze, dass die Abgastemperatur bei gleichbleibender Motorleistung mit zunehmendem Biokraftstoffanteil ansteigt, wobei sich insbesondere im oberen Motorleistungsbereich eine eindeutige, nämlich im Wesentlichen lineare Korrelation zwischen der berechneten Temperaturabweichung $T_{diff}$ und dem im Dieselkraftstoffgemisch enthaltenen Biokraftstoffanteil beobachten lässt. Da das Abgasmodell für rein fossilen Dieselkraftstoff mit hinreichender Genauigkeit bekannt ist, mithin eine Vorhersage der im Hinblick auf die jeweilige Motorleistung zu erwartenden Abgastemperatur ohne Weiteres möglich ist, lässt sich mittels des erfindungsgemäßen Verfahrens ein in dem Dieselkraftstoffgemisch enthaltener erhöhter Biokraftstoffanteil mit dementsprechend geringem Aufwand erkennen.

Die so gewonnene Kenntnis über die Zusammensetzung des Dieselkraftstoffgemischs kann beispielsweise zur Modifikation eines in einem Motorsteuergerät hinterlegten Motorkennfelds herangezogen werden. Die Modifikation des Motorkennfelds erfolgt derart, dass auch im Falle eines erhöhten Biokraftstoffanteils gesetzlich vorgeschriebene Schadstoffemissionsgrenzen zwingend eingehalten werden. Bei den zugesetzten Biokraftstoffen handelt es sich typischerweise um alternative oder synthetische Kraftstoffe wie Fettsäuremethylester (FAME), Pflanzenöl, verflüssigte Biomasse (BTL; Biomass-to-liquid), verflüssigte Gase (GTL; Gas-to-liquid), oder dergleichen.

Vorteilhafte Weiterbildungen des erfindungsgemäßen Verfahrens gehen aus den Unteransprüchen hervor.

Vorzugsweise wird auf einen erhöhten Biokraftstoffanteil von mehr als 50% geschlossen, wenn die aus der Differenz zwischen dem Istwert $T_{ist}$ und dem Referenzwert $T_{ref}$ berechnete Temperaturabweichung $T_{diff}$ einen vorgegebenen Schwellenwert $T_{lim}$ übersteigt. Die Vorgabe des Schwellenwerts $T_{lim}$ richtet sich letztlich danach, ab welchem Biokraftstoffanteil eine Modifikation des Motorkennfelds zu erfolgen hat, um die gesetzlich vorgeschriebenen Schadstoffemissionsgrenzen einzuhalten.

Der Schwellenwert $T_{lim}$ wird hierzu typischerweise in der Größenordnung von 40 Kelvin ($\pm$ 10%) vorgegeben, sodass auf einen erhöhten Biokraftstoffanteil dann geschlossen wird, wenn die Bedingung $T_{ist} - T_{ref} > 40K$ erfüllt ist.

Da die Korrelation zwischen der berechneten Temperaturabweichung $T_{diff}$ und dem in dem Dieselkraftstoffgemisch enthaltenen Biokraftstoffanteil im unteren Motorleistungsbereich vergleichsweise gering ausgeprägt ist, ist es von Vorteil, wenn der zwischen dem Istwert $T_{ist}$ und dem Referenzwert $T_{ref}$ der Abgastemperatur durchgeführte Vergleich bzw. die Modifikation des Motorkennfelds ausschließlich dann erfolgt, wenn die momentane Motorleistung $P_{ist}$ einen vorgegebenen Schwellenwert $P_{lim}$ erreicht oder übersteigt.

Der Schwellenwert $P_{lim}$ wird typischerweise in der Größenordnung von 50% der maximal abrufbaren Motorleistung vorgegeben. Der zwischen dem Istwert $T_{ist}$ und dem Referenzwert $T_{ref}$ durchgeführte Vergleich erfolgt also dann, wenn die Bedingung $P_{ist} \geq 50\%$ erfüllt ist. Auf diese Weise ist gewährleistet, dass unter betriebsüblichen Lastbedingungen des Kraftfahrzeugs ein erhöhter Biokraftstoffanteil mit hinreichender Zuverlässigkeit erkannt wird.

Des Weiteren besteht die Möglichkeit, das Ergebnis des zwischen dem Istwert $T_{ist}$ und dem Referenzwert $T_{ref}$ der Abgastemperatur durchgeführten Vergleichs zur Verifizierung eines übergeordneten Kraftstofferkennungsmodells heranzuziehen. Sollte die Verifizierung fehlschlagen, so wird zur Vermeidung übermäßiger Schadstoffemissionen die Motorleistung durch entsprechende Modifikation des Motorkennfelds fahrerunabhängig gedrosselt.

In das übergeordnete Kraftstofferkennungsmodell gehen beispielsweise Größen wie die Viskosität, die dielektrische Leitfähigkeit und/oder die Dichte des Dieselkraftstoffgemischs ein, wobei diese zur Ermittlung der Zusammensetzung des Dieselkraftstoffgemischs mit der momentanen Kraftstofftemperatur in Beziehung gesetzt werden. Die Erfassung der vorstehend genannten Größen - mit Ausnahme der mittels eines separaten Kraftstofftemperatursensors erfassten Kraftstofftemperatur - erfolgt typischerweise mittels eines als Stimmgabelsensor ausgebildeten Kraftstoffsensors. Ein derartiger Stimmgabelsensor wird beispielsweise von der Firma Measurement Specialities Inc. (MEAS) unter der Baureihenbezeichnung FPS28xx angeboten. Dieser beruht auf der Verwendung einer verstimmbaren Quartz-Resonanzgabel, wobei der Grad der Verstimmung der Quartz-Resonanzgabel beim Eintauchen in das Dieselkraftstoffgemisch einen unmittelbaren Rückschluss auf dessen physikalische Eigenschaften wie Viskosität, dielektrische Leitfähigkeit und/oder Dichte erlaubt.

Das erfindungsgemäße Verfahren wird im Folgenden anhand der beigefügten Zeichnungen näher erläutert. Es zeigen:

Fig. 1    ein Ausführungsbeispiel des erfindungsgemäßen Verfahrens in Gestalt eines Flussdiagramms, und

Fig. 2    ein Ausführungsbeispiel einer schematisch dargestellten Vorrichtung zur Durchführung des erfindungsgemäßen Verfahrens.

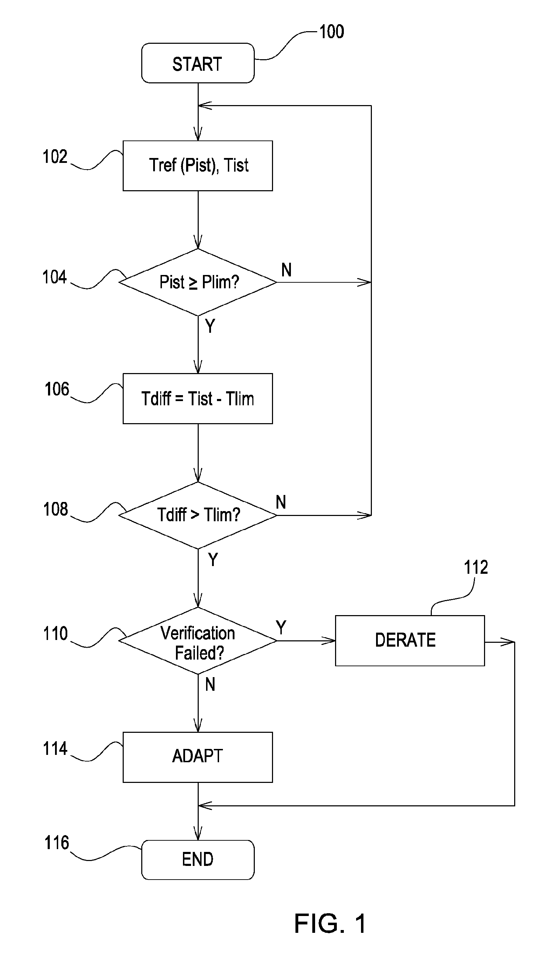

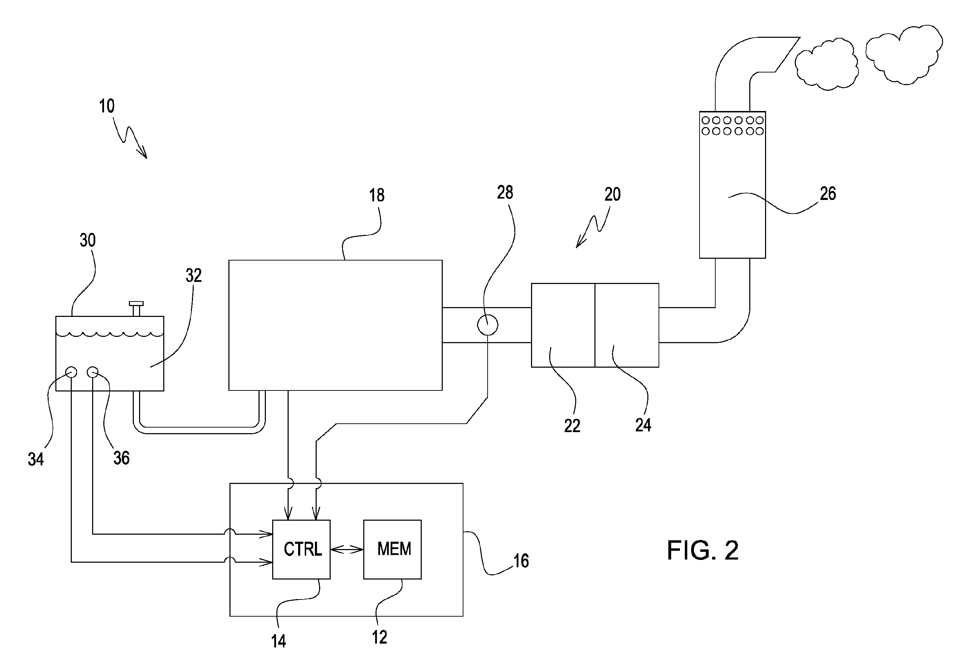

Fig. 1 zeigt ein Ausführungsbeispiel des erfindungsgemäßen Verfahrens in Gestalt eines Flussdiagramms, wobei in Fig. 2 ferner ein Ausführungsbeispiel einer Vorrichtung zur Durchführung des erfindungsgemäßen Verfahrens wiedergegeben ist.

Die Vorrichtung 10 umfasst eine mit einer Speichereinheit 12 kommunizierende Kontrolleinheit 14, die ihrerseits Bestandteil eines übergeordneten Motorsteuergeräts 16 ist, das zum Betreiben eines in einem nicht dargestellten Kraftfahrzeug befindlichen Verbrennungsmotors 18 dient.

Des Weiteren ist ein von Seiten des Verbrennungsmotors 18 mit Abgas durchströmtes Abgasnachbehandlungssystem 20 vorgesehen. Das Abgasnachbehandlungssystem 20 umfasst einen Oxydationskatalysator 22 sowie einen dem Oxydationskatalysator 22 stromabwärts nachgeschalteten Rußpartikelfilter 24 herkömmlicher Bauart. Bei dem Verbrennungsmotor 18 handelt es sich im vorliegenden Fall um einen Common-Rail-Dieselmotor. Der aus dem Rußpartikelfilter 24 austretende Abgasstrom wird über eine Auspuffanlage 26 an die Umgebung abgegeben. Ein im Abgasstrom liegender Abgastemperatursensor 28 dient hierbei der Ermittlung eines für die Abgastemperatur vorliegenden Istwerts $T_{ist}$.

Der Verbrennungsmotor 18 wird mittels eines aus einem Kraftstofftank 30 zugeführten Dieselkraftstoffgemischs 32 gespeist. Innerhalb des Kraftstofftanks 30 befindet sich neben einem Kraftstoffsensor 34 ein zur Erfassung der momentanen Kraftstofftemperatur vorgesehener Kraftstofftemperatursensor 36. Die Signale der beiden Sensoren 34 und 36 - wie auch diejenigen des Abgastemperatursensors 28 - werden der Kontrolleinheit 14 zur Auswertung zugeführt.

Bei dem Kraftstoffsensor 34 handelt es sich beispielsgemäß um einen zur Erfassung der Viskosität, der dielektrischen Leitfähigkeit und/oder der Dichte des Dieselkraftstoffgemischs 32 ausgebildeten Stimmgabelsensor. Ein derartiger Stimmgabelsensor wird beispielsweise von der Firma Measurement Specialities Inc. (MEAS) unter der Baureihenbezeichnung FPS28xx angeboten. Dieser beruht auf der Verwendung einer verstimmbaren Quartz-Resonanzgabel, wobei der Grad der Verstimmung der Quartz-Resonanzgabel beim Eintauchen in das Dieselkraftstoffgemisch 32 einen unmittelbaren Rückschluss auf dessen physikalische Eigenschaften wie Viskosität, dielektrische Leitfähigkeit und/oder Dichte erlaubt.

Der Verbrennungsmotor 18 ist im vorliegenden Fall Bestandteil eines sogenannten Flexfuel-Systems, das einen Betrieb mit Dieselkraftstoffgemischen 32 unterschiedlicher Zusammensetzung, d.h. unterschiedlichen Biokraftstoffanteilen erlaubt. Bei den zugesetzten Biokraftstoffen handelt es sich typischerweise um alternative oder synthetische Kraftstoffe wie Fettsäuremethylester (FAME), Pflanzenöl, verflüssigte Biomasse (BTL; Biomass-to-liquid), verflüssigte Gase (GTL; Gas-to-liquid), oder dergleichen.

Um gesetzlich vorgeschriebene Schadstoffemissionsgrenzen einzuhalten, ist eine Ermittlung der Zusammensetzung des verwendeten Dieselkraftstoffgemischs 32 erforderlich. Diese erfolgt mittels des in Fig. 1 dargestellten und nachfolgend beschriebenen Verfahrens.

Bei dem in einem Initialisierungsschritt 100 beim Anlassen des Kraftfahrzeugs gestarteten Verfahren wird in einem ersten Verfahrensschritt 102 auf Grundlage eines in der Speichereinheit 12 hinterlegten Kraftstoffmodells eine für die Verwendung rein fossilen Dieselkraftstoffs zu erwartende Abgastemperatur als Referenzwert $T_{ref}$ bestimmt. Die Bestimmung des Referenzwerts $T_{ref}$ erfolgt nach Maßgabe einer momentanen Motorleistung $P_{ist}$, die von der Kontrolleinheit 14 aus einem in der Speichereinheit 12 hinterlegten Motorkennfeld abgeleitet wird. Zugleich wird im ersten Verfahrensschritt 102 mittels des im Abgasstrom liegenden Abgastemperatursensors 28 ein für die Abgastemperatur vorliegender Istwert $T_{ist}$ ermittelt.

In einem nachfolgenden zweiten Verfahrensschritt 104 wird überprüft, ob die momentane Motorleistung $P_{ist}$ einen vorgegebenen Schwellenwert $P_{lim}$ in der Größenordnung von 50% der maximal abrufbaren Motorleistung erreicht oder übersteigt,

$$P_{ist} \geq 50\% \ . \hspace{5cm} (1.1)$$

Ist die vorstehende Bedingung (1.1) erfüllt, wird mit einem dritten Verfahrensschritt 106 fortgefahren, in dem anhand eines von der Kontrolleinheit 14 zwischen dem Istwert $T_{ist}$ und dem Referenzwert $T_{ref}$ der Abgastemperatur durchgeführten Vergleichs durch Differenzbildung eine Temperaturabweichung $T_{diff} = T_{ist} - T_{ref}$ berechnet wird. Ist die Bedingung (1.1) hingegen nicht erfüllt, kehrt das Verfahren zum ersten Verfahrensschritt 102 zurück, um erneut durchlaufen zu werden.

Ergibt sich in einem auf den dritten Verfahrensschritt 106 folgenden vierten Verfahrensschritt 108, dass die zwischen dem Istwert $T_{ist}$ und dem Referenzwert $T_{ref}$ berechnete Temperaturabweichung $T_{diff}$ einen vorgegebenen Schwellenwert $T_{lim}$ in der Größenordnung von 40 Kelvin ($\pm$ 10%) übersteigt,

$$T_{diff} > 40K \ , \hspace{5cm} (1.2)$$

wird von der Kontrolleinheit 14 auf einen in dem Dieselkraftstoffgemisch 32 enthaltenen erhöhten Biokraftstoffanteil von mehr als 50% geschlossen. Ist die vorstehende Bedingung (1.2) hingegen nicht erfüllt, kehrt das Verfahren zum ersten Verfahrensschritt 102 zurück, um von vorne durchlaufen zu werden.

Das Ergebnis des im vierten Verfahrensschritt 108 zwischen dem Istwert $T_{ist}$ und dem Referenzwert $T_{ref}$ der Abgastemperatur durchgeführten Vergleichs wird von der Kontrolleinheit 14 in einem fünften Verfahrensschritt 110 zur Verifizierung eines übergeordneten Kraftstofferkennungsmodells herangezogen. In das Kraftstofferkennungsmodell geht die mittels des Kraftstoffsensors 34 erfasste Viskosität, dielektrische Leitfähigkeit und/oder Dichte des Dieselkraftstoffgemischs 32 ein, wobei die vorgenannten Größen zur Ermittlung der Zusammensetzung des Dieselkraftstoffgemischs 32 mit der mittels des Kraftstofftemperatursensors 36 erfassten Kraftstofftemperatur in Beziehung gesetzt werden.

Wird im fünften Verfahrensschritt 110 das Fehlschlagen der Verifizierung festgestellt, so wird zur Vermeidung übermäßiger Schadstoffemissionen die Motorleistung in einem sechsten Verfahrensschritt 112 durch entsprechende Modifikation des in der Speichereinheit 12 hinterlegten Motorkennfelds fahrerunabhängig gedrosselt, wobei das Verfahren anschließend in einem Schlussschritt 116 beendet wird. Andernfalls wird mit einem siebten Verfahrensschritt 114 fortgefahren, in dem die im vierten Verfahrensschritt 108 gewonnene sowie im fünften Verfahrensschritt 110 verifizierte Kenntnis über die Zusammensetzung des Dieselkraftstoffgemischs 32 zur Modifikation des in der Speichereinheit 12 hinterlegten Motorkennfelds herangezogen wird. Die Modifikation erfolgt derart, dass auch im Falle eines erhöhte Biokraftstoffanteils von mehr als 50% gesetzlich vorgeschriebene Schadstoffemissionsgrenzen zwingend eingehalten werden.

Anschließend wird das Verfahren im Schlussschritt 116 beendet.

## Patentansprüche

1. Verfahren zur Ermittlung der Zusammensetzung eines Dieselkraftstoffgemischs für einen Verbrennungsmotor in einem Kraftfahrzeug, bei dem

(i) auf Grundlage eines vorgegebenen Abgasmodells eine für die Verwendung rein fossilen Dieselkraftstoffs zu erwartende Abgastemperatur als Referenzwert ($T_{ref}$) bestimmt wird, wobei die Bestimmung des Referenzwerts ($T_{ref}$) nach Maßgabe einer momentanen Motorleistung ($P_{ist}$) erfolgt,

(ii) mittels eines in einem Abgasstrom liegenden Abgastemperatursensors (28) ein für die Abgastemperatur vorliegender Istwert ($T_{ist}$) ermittelt wird, und

(iii) anhand eines zwischen dem Istwert ($T_{ist}$) und dem Referenzwert ($T_{ref}$) durchgeführten Vergleichs eine Temperaturabweichung ($T_{diff}$) berechnet wird, aus der auf einen dem Dieselkraftstoff beigemischten erhöhten Biokraftstoffanteil geschlossen wird.

2. Verfahren nach Anspruch 1, **dadurch gekennzeichnet, dass** auf einen erhöhten Biokraftstoffanteil von mehr als 50% geschlossen wird, wenn die aus der Differenz zwischen dem Istwert ($T_{ist}$) und dem Referenzwert ($T_{ref}$) berechnete Temperaturabweichung ($T_{diff}$) einen vorgegebenen Schwellenwert ($T_{lim}$) übersteigt.

3. Verfahren nach Anspruch 2, **dadurch gekennzeichnet, dass** der Schwellenwert ($T_{lim}$) in der Größenordnung von 40 Kelvin vorgegeben wird.

4. Verfahren nach Anspruch 1, **dadurch gekennzeichnet, dass** der zwischen dem Istwert ($T_{ist}$) und dem Referenzwert ($T_{ref}$) der Abgastemperatur durchgeführte Vergleich ausschließlich dann erfolgt, wenn die momentane Motorleistung ($P_{ist}$) einen vorgegebenen Schwellenwert ($P_{lim}$) erreicht oder übersteigt.

5. Verfahren nach Anspruch 4, **dadurch gekennzeichnet, dass** der Schwellenwert ($P_{lim}$) in der Größenordnung von 50% der maximal abrufbaren Motorleistung vorgegeben wird.

6. Verfahren nach Anspruch 1, **dadurch gekennzeichnet, dass** das Ergebnis des zwischen dem Istwert ($T_{ist}$) und dem Referenzwert ($T_{ref}$) der Abgastemperatur durchgeführten Vergleichs zur Verifizierung eines übergeordneten Kraftstofferkennungsmodells herangezogen wird.

7. Vorrichtung zur Durchführung des Verfahrens nach einem der Ansprüche 1 bis 6, mit einer Kontrolleinheit (14), die anhand eines vorgegebenen Abgasmodells eine für die Verwendung rein fossilen Dieselkraftstoffs zu erwartende Abgastemperatur als Referenzwert ($T_{ref}$) bestimmt, wobei die Bestimmung des Referenzwerts ($T_{ref}$) nach Maßgabe einer momentanen Motorleistung ($P_{ist}$) erfolgt, und mit einem in einem Abgasstrom liegenden Abgastemperatursensor (28), mittels dessen ein für die Abgastemperatur vorliegender Istwert ($T_{ist}$) ermittelt wird, wobei die Kontrolleinheit (14) anhand eines zwischen dem Istwert ($T_{ist}$) und dem Referenzwert ($T_{ref}$) durchgeführten Vergleichs eine Temperaturabweichung ($T_{diff}$) berechnet, aus der die Kontrolleinheit (14) auf einen dem Dieselkraftstoff beigemischten erhöhten Biokraftstoffanteil schließt.

FIG. 1

FIG. 2

**IN DER BESCHREIBUNG AUFGEFÜHRTE DOKUMENTE**

**In der Beschreibung aufgeführte Patentdokumente**

- DE 102008025350 A1